# EUROPEAN PATENT APPLICATION

(11) **EP 4 060 909 A1**
(43) Date of publication of application: **21.09.2022**
(21) Application number: 21162821.9
(22) Date of filing: 16.03.2021
(51) Int. Cl.: H04B 17/00, H04B 17/309, H04B 17/318, H04W 24/10

(54) **PROGRESSIVE WIRELESS SIGNAL QUALITY INDICATOR MAP REFINEMENT FOR WIRELESS NETWORKS**

(71) Applicant: Siemens Aktiengesellschaft, 80333 München (DE)
(72) Inventor: Michailow, Nicola, 81825 München (DE); Richerzhagen, Björn, 85055 Ingolstadt (DE); Kornbichler, Andreas, 83623 Dietramszell (DE)

(57) **Abstract**

The invention discloses an automated method for a progressive refinement of a wireless signal quality indicator map ((4) based on at least one parameter indicating the signal quality of the wireless signal, comprising the steps of:
- determining the wireless signal quality indicator map (4) based on measurement by at least one fixed first computerized wireless parameter measuring device (3.1),
- determining an area of interest (6) in the wireless signal quality indicator map (4) where the parameter is lower than a pe-defined threshold value and/or the confidence in a measurement value of the parameter is lower than a predefined target value,
- deploying at least one software-based sensor application (7.2) to at least one computerized appliance (7) located in the area of interest (6), whereby the sensor application (7.2) is dedicated to measure the parameter using hardware and/or software of the appliance (7), and
- refining the wireless signal quality indicator map (5) by the parameter measured by the sensor application (7.2).

A system related to the automated method is disclosed as well.

## Description

### FIELD OF THE INVENTION

The present invention relates to an automated method and system for a progressive refinement of a wireless signal quality indicator map, e.g., a radio map, based on at least one parameter, e.g. signal power, indicating the signal quality.

### BACKGROUND OF THE INVENTION

Wireless networks suffer from interference and complex propagation effects caused by obstacles and reflections. To plan and operate a wireless network, wireless signal quality indicator maps, e.g., radio maps for signal strength or signal power, provide information about (estimated) wireless coverage for a specific area (e.g., a factory) based on simulations or on predictions and estimations based on data obtained through measurements with sensing devices.

These maps are then used to determine placement of (additional) antennas, configuration of signal strength and/or cell layouts, or (potentially) to even alter the layout of the respective area where appropriate (e.g., remove obstacles).

With an increasing dynamicity in the layout of, e.g., industrial production sites with modular flexible production cells and mobile AGVs (Autonomous Guided Vehicles), such radio maps need to be updated and refined accordingly to pinpoint potential connectivity issues and aid in network planning.

Through simulations, assuming knowledge of the layout of the area (e.g., a production line), the obstacles, their materials and propagation models for the radio signals (Maxwell equations, etc.) radio maps can be determined. Such simulations could further be refined with process-level aspects such as mobility of AGVs, storage of goods and placement of machines.

Through measurements with fixed sensors, e.g., integrated into wireless transmitters/receiver (e.g. FritzBox, SCALANCE, 5G base station) or mobile sensors operated by a human expert, who is measuring propagation characteristics during the initial setup of a wireless factory network the radio map can be determined. For this, typically dedicated measurement equipment (e.g., spectrum analyser, directional antennas) is utilized.

State of the art is measurement by human operators. As for the deployment of a large quantity of static sensors, this method is an expensive solution, also due to missing automation. In addition, it does not guarantee timely measurements when an incident occurs, and the solution is impractical when the network is to be observed over longer periods of time. The irregularity of measurements and the potentially low number of data points further poses a challenge to radio map generation algorithms, especially when those are based on ML/AI methods.

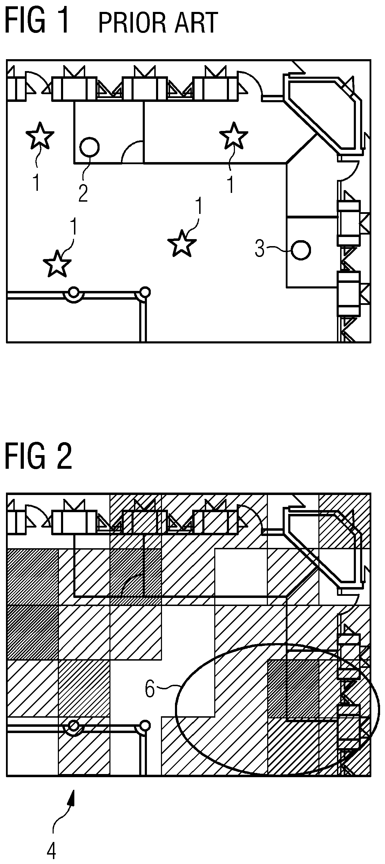

FIG. 1 shows an illustration of an example for static measurements or simulations including models of relevant physical characteristics. The illustration shows the geographical area of interest with the help of a floorplan of a factory. The stars 1 mark the locations of initial measurement of at least one parameter of a wireless network. The bubble 2 marks a location where the material of the wall must be included in a model for simulation. Bubble 3 marks the location where a wireless transmitter is located and its antenna and power configuration for the model of simulation.

A method for determining wireless network coverage within an environment is disclosed in the patent application EP 3 557 899 A1.

### SUMMARY OF THE INVENTION

The objective of the present invention is to provide a solution for improvement of signal measurement in wireless networks.

To accomplish the objective, the present invention provides a solution according to the independent claims. Advantageous embodiments are provided in the dependent claims.

According to a general aspect of the invention a method for the progressive refinement of the quality of wireless signal quality indicator maps (e.g., radio maps) for specific areas (locations) of interest (e.g., those areas with disturbances) is provided. In those areas on-demand deployment of sensing capabilities for the wireless signal in terms of hardware and/or software is provided.

One aspect of the invention is the placement of software sensors. Generally, monitoring and management solutions for fixed and mobile networks and for cloud-based systems can include the possibility to deploy specific sensing capabilities (e.g., sampling of CPU load). Here, well-defined interfaces are utilized to gather the respective information. Deep integration with (wireless) communication chipsets and stacks or specialized hardware (e.g., software-defined radios) to capture characteristics (= parameters) of the wireless environment/channel is not foreseen in such cases.

Adding the ability to utilize appliance-specific data points in an (industrial) edge platform increases the quality of wireless signal quality indicator maps and, consequently, their benefit during planning and configuration of wireless networks and/or processes and factory/building layouts. All of this can be achieved without the need for expensive special-purpose static sensors.

The deployment of static sensors to measure wireless signal quality indicator maps is a costly alternative. Creating and maintaining an up-to-date high resolution wireless signal coverage map of the industrial environment would require a high density of sensors and result in a high number of data points to be processed by the algorithms predicting the radio map for areas around sensors. To capture relevant characteristics of the wireless network, these sensors contain (expensive) special-purpose hardware, which makes deploying them at large quantities a costly issue. In addition, these resources are unutilized during normal operation (i.e., if there currently is no area of interest or disturbance in the network).

Within the invention, a (potentially small) number of special-purpose sensors can be augmented with sensor applications running on existing appliances only when and if needed and only within certain areas of interest, making reasonable use of available resources. This might include utilizing mobile AGVs (= Autonomous Guided Vehicles) to measure network characteristics right where communication is occurring.

Another, but costly, alternative is a simulation-based radio map generation. As mentioned above, simulation-based generation requires detailed models of the industrial environment (including physical characteristics of materials and, potentially, process-related information such as AGV mobility or warehouse inventory). These models are difficult to obtain and to keep accurate.

Potential other solutions include 3D scanning of an environment and image detection-based classification of materials, but this process is costly and error prone and requires special-purpose hardware and/or human experts. With complex models needed to accurately capture the relevant characteristics of the deployment, simulation times grow significantly. A purely simulation- and model-based generation can only capture effects that have been modelled, which renders its use questionable when disturbances occur.

The invention claims an automated method for a progressive refinement of a wireless signal quality indicator map based on at least one parameter indicating the signal quality, with the steps:
- determining the wireless signal quality indicator map based on measurement by at least one fixed first computerized wireless parameter measuring device,
- determining an area of interest in the wireless signal quality indicator map where the parameter is lower than a pe-defined threshold value and/or the confidence in a measurement value of the parameter is lower than a pre-defined target value,
- deploying at least one software-based sensor application to at least one computerized appliance located in the area of interest, whereby the sensor application is dedicated to measure the parameter using hardware and/or software of the appliance, and
- refining the wireless signal quality indicator map by the parameter measured by the sensor application.

Not only the measured value of the parameter itself is a criterion for signal quality, but also the confidence that the measured value or approximated parameter is correct.

In a further embodiment of the method the parameter is determined by network or application monitoring.

In a further embodiment of the method the parameter is a measure for packet loss or application Quality of Service.

In a further embodiment of the method the sensor application is measuring a further parameter indicating the signal quality using hardware and/or software of the appliance the sensor application is installed.

In a further embodiment the method comprises the steps:
- deploying at least one autonomous guided vehicle,
- guiding the autonomous guided vehicle into the area of interest,
- determining the parameter by a second computerized wireless parameter measuring device located on or in the autonomous guided vehicle, and
- refining the wireless signal quality indicator map by the parameter measured by the second computerized wireless parameter measuring device.

In a further embodiment of the method the second computerized wireless parameter measuring device is measuring a further parameter indicating the signal quality.

In a further embodiment of the method the parameter and/or further parameter comprises information from wireless communication chipsets and stacks on the appliance.

The invention further claims a system for a progressive refinement of a wireless signal quality indicator map based on at least one parameter indicating the signal quality, comprising:
- at least one fixed first computerized wireless parameter measuring device configured to measure the parameter,
- control and computing unit configured to determine the wireless signal quality indicator map based on the measured parameter, and to determine an area of interest in the wireless signal quality indicator map where the parameter is lower than a pe-defined threshold value and/or the confidence in a measurement value of the parameter is lower than a pre-defined target value,
- an app store unit configured to deploy at least one software-based sensor application to at least one computerized appliance located in the area of interest, whereby the sensor application is dedicated to measure the parameter using hardware and/or software of the appliance, and
- whereby the control and computing unit is further configured to refine the wireless signal quality indicator map by the parameter measured by the sensor application.

Appliances include general-purpose hardware such as industrial PCs, wireless base stations (e.g., Wi-Fi access points, 5G base stations), wireless user equipment or other devices capable of measuring signal parameters.

In a further embodiment the system is configured to determine the parameter is by network or application monitoring.

In a further embodiment of the system the parameter is a measure for packet loss or application Quality of Service.

In a further embodiment of the system the sensor application is programmed to measure a further parameter indicating the signal quality using hardware and/or software of the appliance the sensor application is installed.

In a further embodiment the system comprises:
- at least one autonomous guided vehicle configured to guide the autonomous guided vehicle into the area of interest, and
- further configured to determine the parameter by a second computerized wireless parameter measuring device located on or in the autonomous guided vehicle, and
- whereby the control and computing unit is further configured to refine the wireless signal quality indicator map by the parameter measured by the second computerized wireless parameter measuring device.

In a further embodiment the second computerized wireless parameter measuring device is configured to measure a further parameter indicating the signal quality.

In a further embodiment the parameter and/or further parameter comprises information from wireless communication chipsets and stacks on the appliance.

In a further embodiment the appliance comprises a software-defined radio chipset.

With a software-defined radio chipset more fine-grained and communication standard independent measurements are possible.

Further benefits and advantages of the present invention will become apparent after a careful reading of the detailed description with appropriate reference to the accompanying drawings.

### BRIEF DESCRIPTION OF THE DRAWINGS

- FIG. 1: shows an illustration of existing solutions with static measurements or simulations including models of relevant physical characteristics,
- FIG. 2: shows an illustration of a radio map representation as a heatmap used to identify areas with potential disturbances,
- FIG. 3: shows an illustration of sensor application deployment on available appliances in the area of interest,
- FIG. 4: shows an illustration of installation a sensing application on a subset of devices through an App Store,
- FIG. 5: shows an illustration of relocation of sensors deployed on (controllable) mobile appliances, and
- FIG. 6: shows an illustration of a refined heatmap as one potential result of a radio map refinement method.

### DETAILED DESCRIPTION OF THE INVENTION

In the following embodiments the refinement of a radio map as an example for a refinement of a wireless signal quality indicator map is described. It can be transferred to all other types of wireless signal quality indicator maps using other than radio parameters for creation.

Technically, this can be used not only for "wireless signal quality", which is a raw wireless parameter, but also for "application-level performance indicators" like end-to-end latency, throughput, reliability, etc., which are also referred to as quality-of-service (QoS) parameters. These QoS parameters are related to wireless signal quality but can also capture additional aspects that influence an application that makes use of a wireless link.

FIG. 2 shows an illustration of a radio map 4 representation as a heatmap used to identify areas with potential disturbances, e.g., poor signal coverage (= area of interest) 6). The radio map 5 is an embodiment of a "wireless signal quality indicator map" based on at least one parameter indicating the signal quality, here for example the radio signal strength. Poor signal coverage means in this embodiment that the radio signal strength is below a pre-defined threshold value of the radio signal strength and/or the confidence in the measurement value of the radio signal strength is lower than a pre-defined target value.

Areas with poor coverage or potential disturbances (= area of interest 6) are identified based on (i) an existing radio map, for example obtained through simulation or measurements with fixed sensors as listed above and/or (ii) information obtained through network or application monitoring, such as sudden increase in packet loss or violation of application QoS for specific entities operated wirelessly in a location and/or (iii) additional data sources, e.g., video inspection. This identification can happen manually by, e.g., visual inspection of the radio map 4 by a human, or through an automated process taking the data described above into account (in the following referred to as radio map refinement procedure), e.g., artificial intelligence.

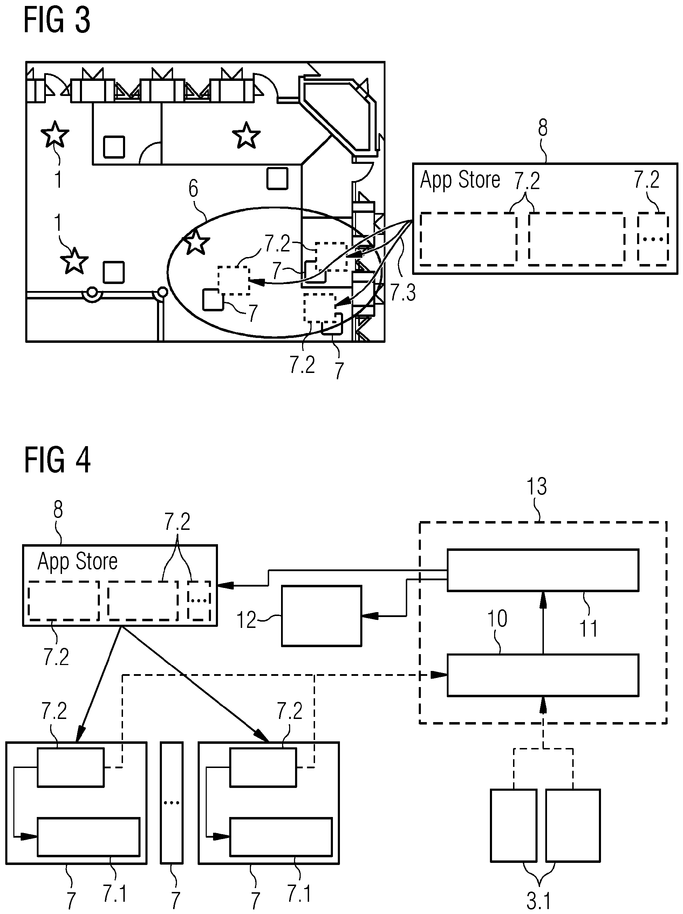

Once the respective areas of interest 6 are identified, sensing capabilities are increased and/or refined for the given region (= area of interest 6) to gather more data that help in solving the underlying problem leading to a performance degradation in the wireless network. This is done as follows illustrated in FIG. 3 and FIG. 4.

Via an App Store unit 8, e.g., as part of an (industrial) edge platform, sensing apps (= software application 7.2) are deployed (= download of software application 7.3) to selected appliances 7 in or near the area of interest 6. Selection is done in the radio map refinement procedure and might utilize information about installed appliances 7 from a management system of the edge platform. Those appliances 7 include general-purpose hardware such as industrial PCs, wireless base stations (e.g., Wi-Fi access points, 5G base stations), wireless user equipment or other devices capable of running the respective applications 7.2 (this may include mobile platforms such as AGVs) near or within the area of interest 6, as illustrated in FIG. 3.

The deployed application 7.2 (also called "sensor app") gathers information from wireless communication chipsets (as an example for a second computerized wireless parameter measuring device 7.1) and stacks on those appliances 7 (e.g., RSSI measurements, reconnect counters, loss rates, number of connected users, etc.). Depending on the appliance 7, a software-defined radio chipset might be available to conduct more fine-grained and communication standard independent measurements. Here, access to the communication chipset, the software stack, a software-defined radio or any other source of sensor data that is not usually available to (containerized) applications in an (industrial) edge platform needs to be enabled and managed for the sensor applications 7.2 through the respective (industrial) edge platform capabilities.

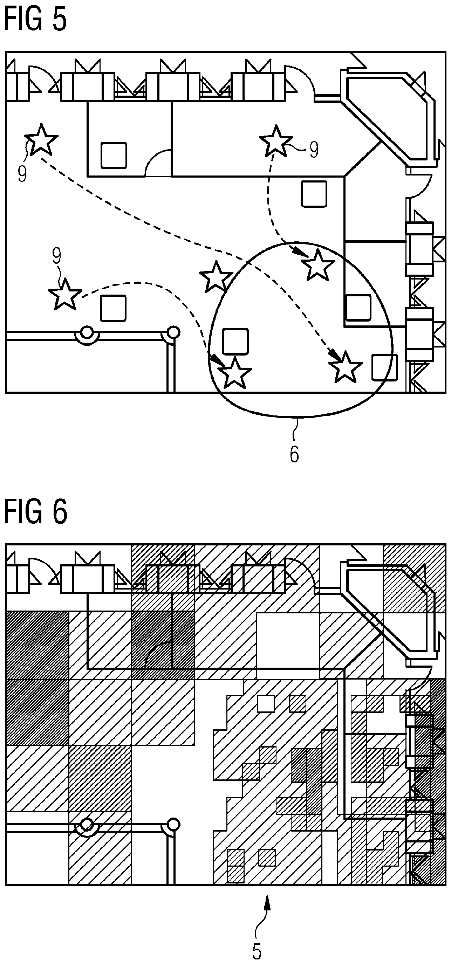

Sensor data (= sensor application data) is reported via the data collection module 10 to the radio map refinement module 11 (both part of a control and computing unit 13) and used to refine the information available in the radio map 4 for the specific area of interest 6 which leads to a refined radio map 5 (see FIG. 6). Knowledge about the characteristics of the mounted antennas (e.g., directionality, radiation pattern) can further help in interpreting the gathered sensor data; such information can either be reported by the respective appliance 7 through the sensor application 7.2 or through external systems (e.g., TIA portal, inventory system) shown as management system 12 in FIG. 4.

Note, that the proposed system still allows data collection through static sensors that do not support installation of applications (e.g., legacy access points, special-purpose sensing hardware), as indicated in FIG. 4 by the first computerized wireless measuring device 3.1 or sensors from a different domain, e.g., video cameras.

In addition to installation and uninstallation of sensor apps 7.2, the proposed solution supports updating sensors with new versions of the sensor app 7.2 or reconfiguring the respective applications 7.2 (change measurement intervals, signals to be measured, additional log files, etc.).

When sensor applications 7.2 are deployed onto mobile appliances (e.g., AGVs 9, Fig. 5), the refinement procedure may interface the respective control systems and potentially alter trajectories to move the "sensor application 7.2" closer to the area of interest 6 or to specific locations within the area, as illustrated in FIG. 5.

The radio map creation procedure might also be altered for a specific area of the radio map to benefit from additional data sources or higher granularity of data (e.g., exchange or reconfiguration of the utilized approximation algorithm, change of the AI/ML procedure). One result of this procedure could be a refined radio map with higher granularity within the area of interest.

The concept can also be utilized to calibrate related wireless systems, e.g., for indoor localization. Here, insights from the radio map such as propagation characteristics or expected signal strength can be used to update distance estimation procedures relying on received signal strength or knowledge about line-of-sight or non-line-of-sight conditions.

Although the invention has been explained in relation to its preferred embodiments as mentioned above, it is to be understood that many other possible modifications and variations can be made without departing from the scope of the present invention. It is, therefore, contemplated that the appended claim or claims will cover such modifications and variations that fall within the true scope of the invention.

### LIST OF REFERENCE SIGNS

- 1: location for initial measurement
- 2: location of wall of interest
- 3: location of transmitter
- 3.1: first computerized wireless parameter measuring device
- 4: radio map
- 5: refined radio map
- 6: area of interest
- 7: appliance
- 7.1: second computerized wireless parameter measuring device
- 7.2: sensor application
- 7.3: download of software application
- 8: app store unit
- 9: autonomous guided vehicle
- 10: data collection module
- 11: radio map refinement module
- 12: management system
- 13: control and computing unit

## Claims

1. Automated method for a progressive refinement of a wireless signal quality indicator map ((4) based on at least one parameter indicating the signal quality of the wireless signal, comprising the steps of:
- determining the wireless signal quality indicator map (4) based on measurement by at least one fixed first computerized wireless parameter measuring device (3.1),
- determining an area of interest (6) in the wireless signal quality indicator map (4) where the parameter is lower than a pe-defined threshold value and/or the confidence in a measurement value of the parameter is lower than a pre-defined target value,
- deploying at least one software-based sensor application (7.2) to at least one computerized appliance (7) located in the area of interest (6), whereby the sensor application (7.2) is dedicated to measure the parameter using hardware and/or software of the appliance (7), and
- refining the wireless signal quality indicator map (5) by the parameter measured by the sensor application (7.2).

2. Method according to claim 1, whereby
the parameter is determined by network or application monitoring.

3. Method according to claim 2, whereby
the parameter is a measure for packet loss or application Quality of Service.

4. Method according to one of the previous claims, **characterized by**:
- measuring a further parameter by the sensor application (7.2), whereby the further parameter is indicating the signal quality, and whereby using hardware and/or software (7.1) of the appliance (7) the sensor application (7.2) is installed.

5. Method according to one of claims 1 to 3, **characterized by**:
- deploying at least one autonomous guided vehicle (9),
- guiding the autonomous guided vehicle (9) into the area of interest (6),
- determining the parameter by a second computerized wireless parameter measuring device (7.1) located on or in the autonomous guided vehicle (9), and
- refining the wireless signal quality indicator map (5) by the parameter measured by the second computerized wireless parameter measuring device (7.1).

6. Method according to claim 5, **characterized by**:
- by the second computerized wireless parameter measuring device (7.1) measuring a further parameter indicating the signal quality.

7. Method according to one of the claims 4 to 6, whereby the parameter and/or the further parameter comprises information from wireless communication chipsets and stacks on the appliance (7).

8. System for a progressive refinement of a wireless signal quality indicator map (4) based on at least one parameter indicating the signal quality of the wireless signal, comprising:
- at least one fixed first computerized wireless parameter measuring device (3.1) configured to measure the parameter,
- control and computing unit (13) configured to determine the wireless signal quality indicator map (4) based on the measured parameter, and to determine an area of interest (6) in the wireless signal quality indicator map (4) where the parameter is lower than a pe-defined threshold value and/or the confidence in a measurement value of the parameter is lower than a pre-defined target value,
- an app store unit (8) configured to deploy at least one software-based sensor application (7.2) to at least one computerized appliance (7) located in the area of interest (6), whereby the sensor application (7.2) is dedicated to measure the parameter using hardware and/or software (7.1) of the appliance (7), and
- whereby the control and computing unit (13) is further configured to refine the wireless signal quality indicator map (5) by the parameter measured by the sensor application (7.2).

9. System according to claim 8, whereby
the system is configured to determine the parameter by network or application monitoring.

10. System according to claim 9, whereby
the parameter is a measure for packet loss or application Quality of Service.

11. System according to one of the claims 8 to 10, whereby the sensor application is programmed to measure a further parameter indicating the signal quality using hardware and/or software (7.1) of the appliance (7) the sensor application (7.2) is installed.

12. System according to one of the claims 8 to 10, **characterized by**:
- at least one autonomous guided vehicle (9) configured to guide the autonomous guided vehicle (9) into the area of interest (6), and
- further configured to determine the parameter by a second computerized wireless parameter measuring device (7.1) located on or in the autonomous guided vehicle (9), and
- whereby the control and computing unit (13) is further configured to refine the wireless signal quality indicator map (5) by the parameter measured by the second computerized wireless parameter measuring device (7.1).

13. System according to claim 12, whereby:
- the second computerized wireless parameter measuring device (7.1) is configured to measure a further parameter indicating the signal quality.

14. System according to one of the claims 11 to 13, whereby the parameter and/or further parameter comprises information from wireless communication chipsets and stacks on the appliance (7).

15. System according to one of the claims 8 to 14, whereby the appliance (7) comprises a software-defined radio chipset.
